(19) Europäisches Patentamt
European Patent Office
Office européen des brevets

(11) **EP 4 447 348 A1**

(12) **EUROPEAN PATENT APPLICATION**

(43) Date of publication:
**16.10.2024 Bulletin 2024/42**

(21) Application number: **23305542.5**

(22) Date of filing: **12.04.2023**

(51) International Patent Classification (IPC):
*H04L 1/00* $^{(2006.01)}$   *G06V 20/00* $^{(2022.01)}$

(52) Cooperative Patent Classification (CPC):
**H04L 1/0001; H04L 27/0008;** H04L 27/2602

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Commissariat à l'énergie atomique et aux énergies alternatives**
**75015 Paris (FR)**
• **UNIVERSITE DE BORDEAUX**
**33000 Bordeaux (FR)**
• **Institut Polytechnique de Bordeaux**
**33400 Talence (FR)**

• **Centre National de la Recherche Scientifique**
**75016 Paris (FR)**

(72) Inventors:
• **CALVANESE STRINATI, Emilio**
**38054 GRENOBLE Cedex 09 (FR)**
• **RIVET, François**
**33400 TALENCE (FR)**
• **DEVAL, Yann**
**33800 BORDEAUX (FR)**

(74) Representative: **Atout PI Laplace**
**Immeuble Up On**
**25 Boulevard Romain Rolland**
**CS 40072**
**75685 Paris Cedex 14 (FR)**

(54) **SYSTEM, METHOD AND COMPUTER PROGRAM PRODUCT FOR COMMUNICATING SEMANTIC MESSAGES OVER A COMMUNICATION CHANNEL**

(57)    The present invention discloses a method to dynamically adapt a full semantic and RF transmission/reception chain, taking into account jointly both the semantic channel and the physical communication channel. Such adaptation defines the physical shape of the signal that carries the modulated information through the physical channel.

FIG.2

**Description**

**Field of the Invention**

The present invention relates to the field of wireless communications, and particularly relates to a system, method and computer program product to dynamically adapt radio frequency waveform signal to the quality of both a physical communication channel and a semantic communication channel.

**Background Art**

The concepts of semantic and of goal-oriented are not new in communication systems, yet still having fundamental unsolved questions. In 1948, C.E. Shannon categorized communication in three levels: (i) transmission of symbols (technical); (ii) semantic exchange of transmitted symbols (semantic); (iii) effect of semantic information (SI) exchange (effective). In the past 70 years, communications primarily focused on how to accurately and effectively transmit symbols from a transmitter to a receiver, being content-blind.

Nowadays, after having developed the fifth generation (5G) of wireless communication systems and, kick-offing research on beyond 5G (B5G) future networks, groundbreaking solutions are needed to distil data and rethink intelligence transmission exchanges for enabling reliable cognition and task execution at the receiver side.

The assumption that semantics are not relevant is no longer true. Future brain-like intelligence at the edge systems will need to exchange, process and store semantics rather that not paying attention to meanings.

There is then a new surge of interest on semantic communications (or SemCom in brief).

In today's methods, radio frequency (RF) waveform design and its performance evaluation are agnostic to the semantic communication plane. No RF waveform design is performed based on information related to the semantic channel and to the performance targets at the semantic plane. As of today, communication parameters relate to the communication medium and not to the semantic channel that operates on the semantic plane of the exchanged information between communicating source/target nodes.

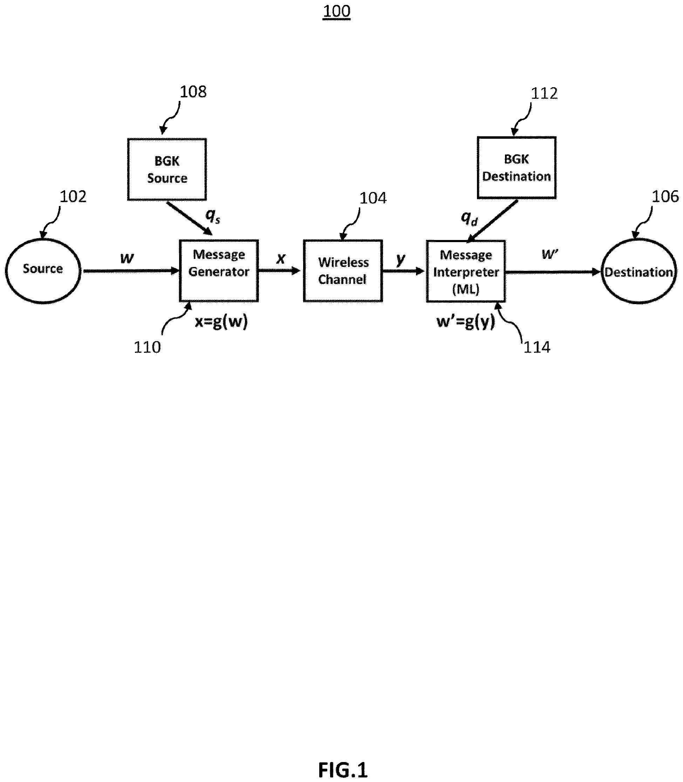

Thus, including semantics in communication process requires adding novel components in the common generic model for communication, such as the one 100 shown in Figure 1.

In Figure 1, semantic messages from a source node 102 (transmitter or sender) are sent through a wireless channel 104 to a destination node 106 (receiver), following classical communication chains composed of channel encoders, modulation module, etc. In the example, at the source side, a signal 'x' is generated 110 from a source message 'w' bearing encoded semantic information '$q_s$'. At the destination side, the received message 'y' may have been distorted due to errors (noise, interferences, fading ...) of the physical communication channel (a wireless channel in figure 1). The received message 'y' may also be misinterpreted by an interpreter 114 due to mismatch between semantic extraction 108 at the source side, and semantic interpretation 112 at the receiving side, and finally the original message may be delivered as a different message 'w" to the destination node 106.

Communication channel dynamics and impairments have for consequence that the transmitted and the received waveforms (at the input of a receiving antenna) might be critically different.

The waveform of the transmitted signal defines the physical shape of the signal that carries the modulated information through a channel. In the state of the art, such waveform design is agnostic to the semantic plane which includes different function from the semantic data extraction to the semantic message generation. Waveform design takes into account only parameters from the physical communication channel (wireless or not), and does not consider interaction with the semantic layer.

Recently with the growing interdependence between communication systems and Artificial Intelligence (AI), new attempts to algorithmically address the semantic communication opportunity have emerged, leveraging on advances in the field of, for example, representation learning, Transformer architectures with Attention mechanisms. End-to-end (E2E) neural architectures are devised to enable semantic transmission of Natural Language Processing (NLP) based sentences, speech signals transmission, object recognitions (in images and videos). Transformers applicability is today understood to be effective mainly in such fields of applications. However, these works are limited in flexibility having fixed number of semantic symbols transmitted irrespective of the conveyed meaning in the transmitted sequence. Moreover, these approaches assume that agents interact adopting the same ontology languages to represent knowledge. So, known solutions on intelligent collaborative inference at the edge, modelized the communication channel as error-free, assuming that communication protocols perfectly counteract the dynamics and imperfection introduced by the channel and impairments by the hardware. Few works consider a very simplistic mathematically friendly framework such as a binary symmetric channel (BSC) or an additive white Gaussian noise (AWGN) channel.

As no channels are error-free, state-of-the-art compensation solutions are mainly that:

(1) RF signal waveform design adapts the waveform parameter to the dynamics of the wireless channel, the possible asynchrony of the communication, etc. However, this adaptation does not consider possible errors or additional error correction capabilities related to the semantic communication plane (semantic channel, semantic extraction and interpretation and related semantic compression versus robustness trade-off). Implicitly those works either ignore the possible presence of a semantic channel or implicitly assumes the semantic channel to be error-free, where perfect compensation from communication protocols, counteract semantic, environment and hardware impairments;

(2) Semantic communication parameters configuration and semantic functions (semantic extraction, semantic interpretation, etc.) are not adapted to the actual configuration of RF waveform and it is designed assuming either the wireless channel error free or its performance independent from the semantic channel.

The existing adaptive mechanisms are designed to counteract impairments caused by the physical communication channel (noise, interference, fading, etc.). The overall semantic communication is indeed proposed to be shaped to compensate the impairments it causes, resulting in costs and degraded performance.

In the article of S. Guo, Y. Wang and P. Zhang, "Signal Shaping for Semantic Communication Systems with A Few Message Candidates", arxiv arXiv:2202.02072, February 2022, a proposed waveform design is limited to the natural language programming case and to the use of BERT metrics for semantic similarity evaluation. The RF waveform is not adapted to the semantic channel. Waveform design is not at RF level. The paper discloses a signal shaping method by minimizing the semantic loss, which is measured by a neural network pre-trained bidirectional encoder representation from transformers (BERT) model. The method applies only to natural language programming, and proposes to choose a signal modulation (PAM, QAM and others) and a mapping between semantic symbols and modulation constellation. This approach is completely agnostic to possible mismatch between transmitter and receiver languages (that constitute one feature of the semantic channel). Thus it is agnostic to the semantic communication channel.

There is then no solution that allows adapting a physical communication channel (wireless or wired) to the needs of a semantic communication channel.

There is thus a need for a solution that considers interaction between a semantic plane and a waveform design for semantic communication.

The present invention offers a solution to this need.

**Summary of the invention**

The present invention offers a method for adapting in semantic communication a signal generation to both a physical communication channel and a semantic communication channel.

Such adaptation defines a physical shape of a signal that carries modulated information from a sender to a receiver through a physical channel (wired, wireless, etc.).

Advantageously, by adapting a signal's waveform to both a wireless communication channel and a semantic channel, the present invention allows creating a more effective communication environment for the exchange of semantic symbols over wireless links.

Furthermore, by adapting the design of a signal waveform to both a quality of a wireless channel (a current measured quality or a quality defined statistically) and a quality of a semantic channel, the present invention allows addressing a twofold components communication channel: Semantic and Wireless.

With this patent we propose that the transmitted radio frequency (RF) waveforms should be designed in accordance with the channel status at the moment of the physical transmission. This patent includes in such channel status both the physical communication channel and the semantic communication channel.

Still advantageously, the present invention allows exploiting the correct interpretation and robustness at a receiver side, thereby improving the joint semantic communication and physical communication operation point, in terms for instance of energy, and/or spectrum occupation, and/or electromagnetic field radiation, etc.

This invention does not only address the use of semantic meaning in the determination of a signal waveform shaping but also the presence and quality of a semantic channel in addition to the presence and quality of a wired or wireless communication channel.

According to various embodiments, the present invention allows:

- adapting the representation of semantic symbols (i.e. number # of semantic symbols per concepts or message, various choices in semantic extraction and interpretation rules) to a virtual joint radio and semantic channel;

- adapting a radio frequency signal waveform shape based on a trade-off between hardware resources, time and frequency shape of the signal;

- inputting to semantic extraction and interpretation modules, information of semantic aware radio frequency waveform performance in order to perform compensation at the semantic interpretation module.

Advantageously, the present invention considers that adaptation at the semantic level defines trade-offs that have impact on:

- how semantic information is extracted (i.e. by identifying the semantic concepts to be transmitted to a receiver). For instance, if the semantic extraction is performed with a neural network, the weight of such neural networks is adapted;

- a level of acceptable semantic ambiguity (i.e. many concepts represented with a set of symbols, in contrast with a one-to-one matching concept to symbol set where there is not ambiguity). As an example, "week-end" maps into "Friday night to Sunday night". Therefore, there is an existing ambiguity stating that one will do something during the week-end since the exact day is not known;

- how concepts are mapped into semantic symbols (i.e. the number of semantic symbols per concept representation varies depending on the complexity of the concept, the adopted language for representing the concepts which depends in principle on the quality of the semantic channel and the quality of the wireless channel); and symmetrically a de-mapping at the receiver side, on how semantic symbols are mapped into concepts; i.e. semantic interpretation.

Another interesting feature of implementing the present invention is that with joint source channel coding techniques, the method allows a trade of compression gain with communication reliability, while modelling the channels either as error-free or as already determined.

The present invention will find advantageous applications for future generation of wireless communication systems, particularly the AI based communication that is empowered by semantic communications.

Among the beneficial applications, it may be cited the 5G and future 6G networks in order to improve performance (having clear targets expressed in terms of key performance indicators (KPIs) such as peak data rate, spectral efficiency, power consumption, complexity, connection density, latency, and mobility, etc.).

Furthermore, the 5G network but also the new 6G standard will support a diverse range of services all under the same network, calling for extreme flexibility of the air interface.

Industrial applications are related to any service that implies the share of knowledge between intelligent agents (natural or AI). An example is the cooperative-robots. Another beneficial application is the "Metaverse" where a digital copy is created in the Metaverse digital twin. With Metaverse applications, the (virtual) service provider is responsible for creating and rendering the Metaverse and is required to use the data collected by (IoT) devices to create the virtual copy of the physical world. However, due to the huge volume of the collected data (e.g., images and videos) and the limited bandwidth of the wireless communication system, an operator might become unable to retrieve all the required data from the physical world. Furthermore, the Metaverse needs fast replication (e.g., rendering) of the digital copy adding more restrictions on the data transmission delay. An approach for solving the aforementioned challenges is that data can be exchanged in form of processable knowledge, thus applying semantic communication principles in order to minimize the size of the transmitted data over the wireless channels and to maximize the effectiveness of the shared information.

To achieve the foregoing objects, a system, method and computer program product are provided in the appended claims.

A computer implemented method as recited in claim 1 is provided.

Specifically, a computer implemented method for communicating semantic messages over a RF channel, the RF channel being characterized by a RFlink quality, the method comprising:

- characterizing a semantic link quality for a semantic channel, for the transmission of a semantic message between a transmitter and a receiver;
- determining, from at least one metric characterizing the RFlink quality and at least one metric characterizing the semantic link quality, at least one semantic-RFmetric characterizing a link quality of a virtual joint semantic-RF channel;
- determining, from the at least one semantic-RF metric and semantic mapping rules, physical and semantic constraints parameters for RF waveform shaping;
- computing at least one RF waveform shape for the semantic message, using the shaping constraints parameters;
- building a RF signal representing the semantic message, based on the at least one RF waveform shape; and
- transmitting the RF signal over the RFchannel.

The invention further addresses a system comprising means adapted to carry out the steps of the method according to any one of method claims.

Another object is a computer program comprising non-transitory instructions for carrying out the steps of the method according to any one of method claims when said computer program is executed on a suitable computer device.

Further aspects of the invention will now be described, by way of preferred implementation and examples, with reference to the accompanying figures.

**Brief description of the drawings**

The above and other items, features and advantages of the invention will be better understood by reading the following more particular description of the invention in conjunction with the figures wherein:

Fig. 1 shows a prior art semantic communication system;

Fig. 2 is a block diagram of the main components of the system of the present invention in an embodiment;

Fig. 3 is a flow chart of the general process for communicating semantic messages over a wireless channel, in accordance with an embodiment of the present invention.

**Detailed description of the invention**

Some definitions of terms, expressions and concepts used in the description and the figures are preliminary listed below:

Definition of semantics:

In linguistics, semantics is the study of meaning in human languages. On its turn, meaning is a relationship between two sorts of things: signs and the kinds of things they intend, express, or signify. A human language is the ensemble of signs associated to things in real world or to abstract thoughts and the rules used to compose these signs. Each language has a structure, given by the set of rules used to compose its signs to create sentences that are meaningful. This definition of meaning and language can be extended to artificial languages, like for example a computer programming language, after proper identification of symbols and rules that follows the adopted semantic language (or logic).

Semantic communication channel:

A semantic channel is a means of transmitting between intelligent "agents" (an agent being an entity with reasoning and processing capabilities that follows a set of possible logics or languages), information that is understood by the receiving agent based on the meaning the agents assign to it. A semantic channel refers thus to the meaning or intention conveyed by a particular mode of communication (thus the selection of a logic or language, a strategy of communication for instance pragmatic, having the transmitter selecting the semantic message in order to maximize the probability of correct interpretation at the receiver, or based on a cooperation plan where cost of semantic message extraction at the transmitter and semantic message interpretation at the receiver are shared under a given strategy, etc). For instance, in the context of language processing, a semantic channel is the way in which meaning is conveyed through words and phrases following a predefined logic. In the context of natural language processing (NLP) and computational linguistics, semantic channels are instrumental to represent the various ways in which intelligent agents can express their thoughts and ideas in a way that can be understood by others intelligent agents.

In wireless communication context, a "wireless" semantic channel refers to the means of transmitting information wirelessly using a system that utilizes semantic techniques for the representation, interpretation, and transmission of meaning. This can include natural language processing, machine learning algorithms, and other forms of data representation that allow for the transmission of meaning over a wireless network.

A group of transition probability functions form a Shannon's channel whereas a group of truth functions form a "wireless" semantic channel. Truth functions are related to logic or language that allows associating observations data with labels, such as for instance features in an image. A label may be for instance a Boolean function of some atomic labels. In this case for a given label, instances are either "true" or "false". As an extension, one can consider instances that are divided into three kinds ("positive", "negative", and "unknown") instead of two kinds as in classical Boolean approaches. Labels can be also derived from other logics, for instance with first order logics.

Semantic distortion:

An important concept related to semantic communications is the "semantic distortion" which refers to a phenomenon in which the meaning of a semantic message is altered, distorted, or changed in some way as it is transmitted from a transmitting agent (also named "teacher") to a receiving agent (also named "learner"), and/or in some way as it is misinterpreted by the receiver. Semantic distortion can indeed be caused by errors at the physical communication channel (for instance due to noise or interference in the wireless channel) as well as due to a mismatch between semantic extraction (at the teacher side) and semantic interpretation at the receiver side (by the learner). This can happen due to a variety of factors such as cultural differences, language difference, contextual biases, and differences in trained interpretation functions. In the context of language processing, semantic distortion can occur when there is a mismatch between the intended meaning of a message and the interpretation of the message by the receiver. This can lead to misunderstandings, communication breakdowns, and difficulties in achieving the intended goals of a semantic communication.

Semantic channel quality:

The quality of a semantic channel is related to the mismatch between transmitter and receiver logics. The higher of distortion resides at the interpretation of a message at the receiver side.

A semantic channel is defined as "transparent" when both a teacher (having access to the observation data and sending it completely or in a compressed/different representation manner to the learner), sending semantically expressed observation, and a learner receiving the data, use the same logic (or language). The learner thus can label observation data with the same set of truth functions than the receiver.

A semantic channel is defined as "opaque" when teacher and learner use different truth functions. When a semantic channel is opaque, the semantic communication adds errors on top of the possible wireless channel communication errors (due to noise, interference, etc.). The capacity at the transmitter side to extract semantic information given the logic/language of the extractor component and the capacity at the receiver side of interpreting the received semantic symbols, evolve in time. In fact, since the communication between the source and the destination provide an online training, it makes (1) the logic/language at the transmitter and at the receiver not necessarily evolve with the same way and at the same speed, (2) the background knowledge available at the transmitter and at the receiver evolve in time differently since transmitter and receiver can process differently the received information and also can perform different communications with other units (intelligent agents, sensors providing data, communication units, etc.).

It is to be noted that when semantic communication is operated with a language (ontology, neural network logic and training, etc.) mismatch between the source and the destination, semantic extraction and interpretation follows different rules. Knowledge representation at source and at destination might notably differ. This causes the known "lost in translation errors" effect, emerging when sender and receiver reasoning (different languages and different knowledge representations) is based on different languages. Those errors are present also in case of wireless error-free channel, but are more critical if the wireless channel adds errors for which an ambiguity on the intended transmitted concept is added.

Issue of communication errors:

Certainly, no communication is error free. Hardware brings into play non-linear electronics which induce distortion and noise in the signal transmission and reception. The sources are transistors, frequency generation with phase noise, conversion with jitter, RF building blocks with various non linearities such as intermodulation products in and out of band of interest. In the framework of Semantic Communications over Wireless Channels, communications errors are due to:

- Dynamics of the wireless communication environment (noise, fading, interference, blocking, etc.) to which the current setting for communication (target communication rate, transmission power, spectral efficiency, waveform robustness to noise and interference, etc.), but what is specific for Wireless Semantic Communications is the presence of a semantic channel being exposed to;

- Hardware impairments such as power amplifier distortions, memory effects in large band communications, frequency sensitivity to multi-path channels (frequency selective channels);

- Semantic noise **Erreur ! Source du renvoi introuvable.** due to limited knowledge representation capabilities (partial observations, limited memory, HW impairments, computational resources unavailability; etc.), Neural Network modules architecture and/or training mismatch, language mismatch between source and destination (agents) (ruling how knowledge is represented and semantic information extracted/interpreted) causing defective semantic strategies for joint source channel coding;

- Asynchronous communication causing inter-symbol interference in the waveform;

- Etc.

The general strategy to cope with errors in the communication is to adapt its parameters (transmission power, carrier frequency, modulation, coding scheme, retransmission protocol, diversity technique as for instance MIMO, etc) to the communication channel quality. Those are (link) adaptation techniques that apply to the physical (wireless) communication channel but that are today not related to the semantic communication channel quality.

Signal waveform adaptation:

Signal waveform adaptation refers to the process of modifying the shape or waveform of a signal to improve its performance in a specific application, i.e. improving Bit Error Rate, Packet Error Rate, Latency, etc. This can be done for a variety of reasons, such as to improve signal quality, reduce distortion, or to make the signal more compatible with a particular system, device or context/environment.

There are various techniques used in signal waveform adaptation, including signal filtering, signal processing, and signal shaping. The specific approach used depends on the requirements of the application and the characteristics of the signal being adapted.

In signal waveform adaptation, various aspects of the signal waveform can be changed to better match a desired or target waveform. Some of the common modifications that can be made include:

- Amplitude: The amplitude of a signal waveform can be adjusted to match the target waveform. This can involve scaling the signal up or down, or normalizing it to a certain level.

- Frequency: The frequency of a signal waveform can be changed to match the target waveform. This can involve shifting the signal to a different frequency, or changing its frequency content through filtering or processing.

- Phase: The phase of a signal waveform can be adjusted to match the target waveform. This can involve shifting the signal in time, or adjusting the phase relationship between different components of the signal.

- Shape: The shape of a signal waveform can be changed to better match the target waveform. This can involve smoothing or filtering the signal, or using signal processing techniques to modify its shape.

The specific changes made to a signal waveform during adaptation as of today depends on the requirements of the application and the characteristics of the signal being adapted, and adaptation is based as of today only on the physical channel (for instance the wireless channel).

In the present invention, signal waveform adaptation refers to the process of adjusting the shape of a signal waveform to better match a desired or a target waveform.

Adaptive Modulation and Coding:

In a mobile environment, the radio channel conditions change frequently because of the varying distance between stations, Rayleigh fading, and interference. The basic idea behind employing Link Adaptation (LA) techniques is to profit of a link as efficiently as possible in the current channel conditions by adapting certain transmission parameters. When an algorithm of LA is employed, this ultimately results in a trade-off between link robustness and bandwidth efficiency. With such adaptive mechanism the system makes the most out of a time varying channel, instead of always operating optimally for a worst-case channel. Other terms for this adaptive technique are "Adaptive Modulation and Coding" (AMC) and "rate adaptation". Although AMC was initially proposed for 3G systems, it has been recently considered for the evolution of both 2G and 3G systems. In fact, AMC is a key technology of IEEE 802.11 and HIPERLAN/2 WLAN standards, and also for the "General Packet Radio Service" (GPRS), "Enhanced Data rates for GSM Evolution" (EDGE) and "High-Speed Downlink Packet Access" (HSDPA) systems.

There are three primary mechanisms by which a system could improve the link robustness at the expense of overall bandwidth efficiency:

Adaptive Modulation:

The transmitter and the receiver negotiate and decide upon the most bandwidth efficient signal constellation that can be used for the current channel condition. For a M-QAM constellation, bandwidth efficiency and robustness are inversely proportional. When the channel deteriorates, bandwidth efficiency is sacrificed and a more robust, lower order modulation scheme is chosen.

Adaptive Forward Error Correction (FEC):

With this adaptive technique, the RLC decides to add overhead to the transmitted data in the form of FEC codewords. This gives robustness at the expense of bandwidth efficiency. The level of FEC used is decided based on the estimated channel conditions. For instance, under excellent channel conditions, the system may choose not to use FEC and achieve maximum bandwidth efficiency.

It is to be noted that all Adaptive Modulation and Coding algorithms aim at making the most of available resources. Classical targets are the enhancement of the transmission spectral efficiency, reduction of delivery delay, improvement of transmission reliability and avoidance of catastrophic transmission configurations for which Quality of Service (QoS) is strongly reduced and communication can drop for a long period. However, none of the prior art adaptive techniques adapt their parameters (transmission power, coding scheme, modulation type and order, interference cancellation techniques, antenna beam selection, etc.) to the semantic and effectiveness planes momentary quality or statistical quality. Those planes are not taken into account.

Waveform Design:

In modern wireless networks, a single waveform type is generally used for uplink communications, as well as downlink communications. For instance, fourth generation (4G) Long Term Evolution (LTE) networks utilize an Orthogonal Frequency Division Multiple Access (OFDMA) waveform for downlink communications and a Single-Carrier Frequency Division Multiple Access (SC-FMDA) waveform for uplink communications. Conversely, 4G Evolved High-Speed Downlink Packet Access (HSDPA+) networks utilize a Code Division Multiple Access (CDMA) waveform for both uplink and downlink communications. Because each waveform has its own advantages/disadvantages, no single waveform is optimal for all applications and all types of communication channels. As such, the performance of conventional wireless networks is limited by virtue of using a single waveform. Moreover, communication performance can be severely affected when such waveforms are statically designed and do not adapt to long term or short term variations on their quality and characteristics of the communication channel.

The goal of RF waveform design is to flexibly optimize the use of existing underutilized spectrum resources, to guarantee interference-free coexistence with legacy transmissions and to provide an improved spectral containment compared to the Orthogonal Frequency Division Multiplexing (OFDM) modulation that is widely used in broadband wireless systems operating below 6 GHz. OFDM is a multicarrier communication scheme that has been widely adopted in a number of different wired and wireless communication systems. Among others, 3GPP adopted it as the underlying physical layer (PHY) technology in mobile broadband systems denoted as 4G Long-Term Evolution (LTE). It exhibits some intrinsic drawbacks including frequency leakage caused by its rectangular pulse shape, spectral efficiency loss due to the use of a cyclic prefix (CP) and need for fine time and frequency synchronization in order to preserve the carrier orthogonality, which guarantees a low level of intra and inter-cell interferences. To overcome these limitations, several alternative candidates have been intensively studied in the literature over the past few years, such as Universal Filtered Multi Carrier (UFMC), Generalized Frequency Division Multiplexing (GFDM) and Filter Bank Multicarrier (FBMC).

Wireless communication Radio Frequency waveform design can be either static or adaptive. In case of adaptive waveform design the overall communication system has the ability to adapt and diversify the waveform to the changing communication environment. Adaptive waveform design change operating parameters such as frequency, gain pattern and pulse repetition frequency to meet the varying environment.

Until recently, communication nodes hardware was not capable of changing the transmitted waveform in real-time. With the emergence of new flexible digital waveform generators and highly advanced electronics, real-time waveform design can successfully be integrated into wireless communication systems. Adaptive RF waveform design exploits information on the overall channel state quality (or channel state information, CSI) such as the propagation environment, transmit and receive antennas and their motion. However, as of today, such information on channel state quality does not include information on either the semantic communication plane (generally named Level B) or the effectiveness plane (generally named Level C).

Waveform defines the physical shape of a signal that carries modulated information through a channel. The information is mapped from a message space to a signal space at the transmitter side, and a reverse operation is performed at the receiver side to recover the message in a communication system. The waveform, which defines the structure and shape of the information in the signal space, can be described by its fundamental elements: symbol, pulse shape, and lattice. The symbols constitute the random part of a waveform whereas the pulse shape and the lattice form the deterministic part.

Symbol: A symbol is a set of complex numbers in the message space that is generated by grouping a number of bits together. The number of bits grouped within one symbol determines the modulation order that has a high impact on the throughput.

Pulse Shape: The form of the symbols in the signal plane is defined by the pulse shaping filters. The shape of the filters determines how the energy is spread over the time and frequency domains and has an important effect on the signal characteristics.

Lattice: The lattice is generated by sampling the time-frequency plane, and the locations of samples define the coordinates of the filters in the time-frequency grid. The lattice geometry might present different shapes such as rectangular and hexagonal according to the formation and distances between the samples. Furthermore, the lattice can be exploited by including additional dimensions such as space domain.

Those elements do not consider the presence of a semantic plane.

A Classical waveform design requirements can be summarized as:

- High Spectral Efficiency: The modulation order, type of pulse shaping filters, and density of the lattice play an important role in determining the spectral efficiency. The guard units in time or frequency domains and other extra overheads decrease the spectral efficiency, which is critical especially for the eMBB type of communications.

- Low Latency: 5G targets latency less than 1 ms for the URLLC applications. 6G is expected to be ever more demanding. This goal can be managed by shortening the transmission time interval (TTI) or increasing the subcarrier spacing. However, the latter approach increases the relative CP overhead for a given TTI. Also, the localization in time is critical, and shorter filter/window durations are needed to fulfill this requirement.

- High Reliability: The reliability is evaluated by bit error rate (BER) or block error rate (BLER), and it is extremely important for mission-critical communications where errors are less tolerable. In addition, the retransmissions due to errors cause an increase in latency, and hence high reliable links are desirable to provide low latency as well. This aspect is notably impacted by the presence of a semantic plane.

Massive Asynchronous Transmission:

It is envisioned that there will be a huge number of nodes communicating over the 5G and beyond network for Massive Machine-Type Communications (mMTC) services. To maintain the synchronicity, excessive overhead is required for these applications. However, it decreases the spectral efficiency significantly. The waveforms that have strict synchronization requirements to achieve interference-free communications are not suitable for mMTC applications. Therefore, the waveforms that are well localized in the multiplexing domain are more suitable to relax the synchronization requirement for these types of applications.

Low Device Complexity:

The computational complexity is another critical metric of the waveform design and depends on the number of operations required at the transmitter side or at the receiver side. Additional windowing, filtering, and interference cancellation algorithms increase complexity substantially, and the system designer should consider it to design a cost- and energy-efficient transceivers.

The following description illustrates several details and an example of communicating semantic messages over a RF channel according to the present invention. An example is more particularly used for illustrating the process for a wireless channel transmitting wireless signals representing semantic message. However, the example is not limited and the skilled person would be able to devise various alternatives, such as applying the principles and concepts to another type of physical channel such as a wired communication channel.

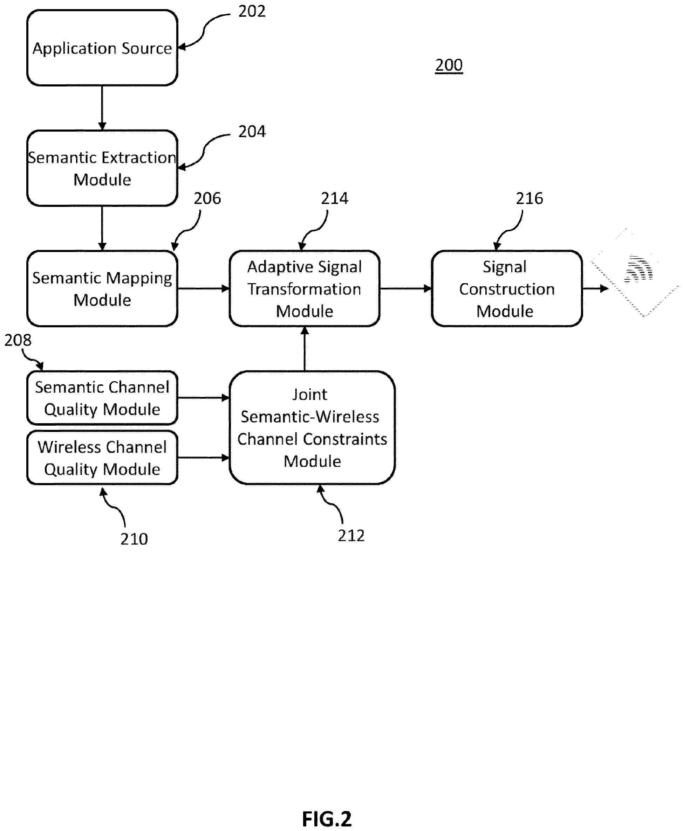

Fig. 2 is a block diagram of the main components of the system 200 of the present invention in an embodiment. Whereas system 200 is purposely simplified, a general environment for operating the present invention may involve the presence of one or more senders that can transmit a message to a destination that can be identified or not. A sender is also referred as source or teacher since it is an entity which shares a processed version of observed data to assist a receiver to operate an inference task or to extract selected information. The sender is also equipped with a wireless communication unit configured to reach the destination either directly or through a single-hop or multi-hops communication, for instance, through a base station, a small cell, a relay or a reconfigurable surface (RIS) deployed in the communication environment. A teacher is coupled to an "intelligence computing unit" able to extract semantics, create/update Machine Learning (ML) models, operate ML operations. The operating environment may also involve one or more receivers (such as mobile terminals, smart phones, mobile Edge hosts, etc.) or IoT devices (such as sensors, Industrial IoT systems, etc). A receiver is also referred as target or learner since it is an entity which elaborates the received data to extract either semantic information and/or to operate an inference or to generate or update a neural network model. A learner is equipped with a wireless communication unit and an "intelligence computing unit" able to interpret semantics, create or update ML models, operate ML operations.

Generally speaking, in operation, a teacher communicates to a learner though a semantic communication chain. Observed data available at the teacher side is semantically extracted (identifying the semantic concepts to be communicated), then mapped into semantic symbols that are encoded and modulated by wireless communication modules (modulator, encoder, waveform generation, etc.). Depending on the targeted semantic compression and the resulting communication (wireless channel plus semantic communication), concepts are selected by a semantic extractor at the learner side (for instance via a neural network attention mechanism). The extraction may further depend on the target complexity that can for instance be measured as the average number of semantic symbols required to represent the semantic message. Different semantic symbols can be in principle represented with a different number of bits that they are physically transmitted over the wireless channel.

Back to figure 2, system 200 is composed of an application source module 202, a semantic extraction module 204, a semantic mapping module 206, a semantic channel quality module 208, a wireless channel quality module 210, a joint semantic-wireless channel constraints module 212, an adaptive signal transformation module 214 and a wireless signal construction module 216.

The semantic mapping module 206 allows providing to the adaptive signal transformation module 214, a set of semantic symbols using a semantic mapping on information extracted by the semantic extraction module 204 from a semantic message received from an application source 202.

Information is extracted in semantic form as semantic concepts. For example, the expression "you are hired" may be broken down into a plurality of syllables ("you", "a", "re" ...). A set of associations between syllables allows mapping the semantic concepts to semantic symbols.

The association of syllables forms a semantic map where the meaning guides the path from one symbol to another.

The joint semantic-wireless channel constraints module 212 allows providing to the adaptive signal transformation module 214, a set of channel constraints parameters determined from channel quality indicators provided by the semantic channel quality module 208 and provided by the wireless channel quality module 210.

As a non-limiting example, a set of constraints parameters may comprise for the semantic channel, constraints on a number of semantic symbols, information on semantic robustness versus compression trade-off, semantic encoding rules, and for the wireless channel, constraints related to the amplitude of coefficients, to a number of coefficients, to the type of coefficients, to the refresh period of coefficients.

The adaptive signal transformation module 214 allows adapting or encoding the semantic message received in the form of symbols by the semantic mapping module 206 into one or several sequences of coefficients each having a specific waveform shape, using the constraints parameters provided by the joint semantic-wireless channel constraints module 212.

Each symbol is translated into a sequence (for instance using Walsh coefficients). The use of the coefficients is free in amplitude, in number, in placement, in synchronization but responds to constraints to guarantee a spread spectrum.

The wireless signal construction module 216 allows generating a wireless signal representing the semantic message, based on the at least one wireless waveform shape. The wireless signal may be transmitted over the wireless channel to the destination(s).

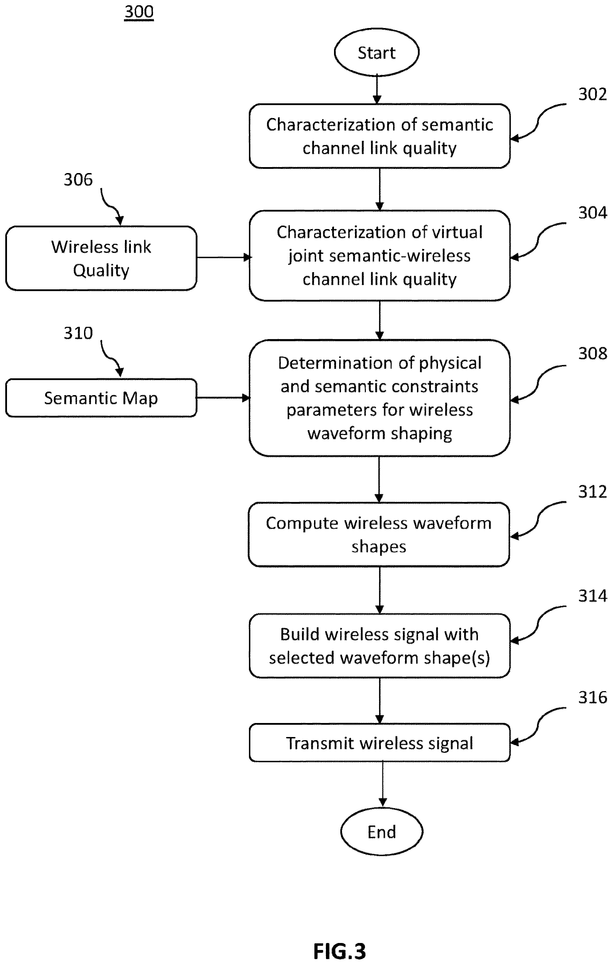

Going now to figure 3, a flow chart of the general process 300 for communicating semantic messages over a RF or wireless channel in accordance with an embodiment of the present invention is described.

The process starts by a step 302 of characterizing a link quality for a semantic channel. The semantic channel link quality may be classified according different levels depending on several factors:

- a semantic communication optimization target metric (for example similarity, equivalence, BLER, ...);

- a semantic communication teacher-learner shared knowledge database mismatch (for example different training of ML, different domains of application, ...);

- a mismatch of teacher and learner adopted languages (i.e. different logics) which can be estimated through learning.

The different levels may be either a binary quality level or a multi-levels quality.

In the approach of binary quality level, the semantic channel is classified (or labelled) as being a "good" or "not good" semantic channel.

In case of "good" channel, this means the semantic communication offers at the semantic level, the maximum level of robustness and/or the system assumes that the semantic communication does not introduce errors. Errors, if any, are indeed only due to the physical channel (in the described application a wireless channel).

Depending on communication scenarios, in the case of "good semantic channel" condition, a set of look up tables (LUT) is precomputed for providing equivalent communication channel quality, by association for example of a physical layer SNR value or more generically by association of a link quality indicator (LQI) to a physical channel.

LUTs provide a precomputed relation between a LQI (SNR in dB for instance) and performance (for instance Bit Error Rate, Packet Error Rate, throughput, BLEU score, etc.), in communication with no semantic communication layer. Such relation of LQI/performance depends on the communication mode (i.e. modulation and coding scheme, number of transmitting and receiving antennas, for instance). By including a semantic channel in the communication, it is statistically measured than a same performance (after semantic message interpretation) can be obtained with a smaller LQI value than without a semantic channel.

The precomputed LUTs should also depend on the quality of the semantic channel.

In a first approach, a semantic channel may be labelled as "not good" or "bad" if the semantic language adopted by the teacher and the one adopted by the receiver mismatch in a way that the system performances (for example the BLER) are drastically impacted, even if a perfect (i.e. error-free) physical channel is used to transfer symbols from the transmitter to the receiver. In such a case the semantic channel is considered as in blocking, and correct message interpretation is not possible.

A LUT allows associating an equivalent SNR ($SNR_{ep}$) to the classification of the channel quality, designates as being "good" or "bad". For instance for a classification of "good", the classification may use a current physical channel SNR value (estimated or measured), plus a value of for example +15 dBs. A classification of "bad" channel is always associated to the lowest equivalent SNR value (few dBs).

In another approach, the quality level of a semantic channel may be classified as a multi-levels quality.

In an embodiment, a 3 levels semantic channel quality may be adopted to classify the semantic channel as being either "good" or "bad" or "intermediate". In this approach, a joint optimization of the physical transmission parameters and of the semantic message extraction to interpretation chain is required.

In an embodiment, a multi-level semantic channel classification is done using machine learning based techniques.

The approach allows associating an equivalent LQI ($SNR_{eq}$ for example) to the classification of the channel quality to each level of semantic channel quality. The values may be obtained with statistical information and/or via machine learning based techniques.

In a variant, the process allows before the characterizing step 302, a step (not shown) to allow a transmitter to collect or to estimate information on a physical channel quality indicator (CQI), before operating semantic extraction of the message. Such CQI can be either obtained from statically averages channel quality or, by instantaneous channel quality estimations, or by a combination of the above two mentioned techniques. In an embodiment, CQI can be estimated at the receiver and send as signalling information to the transmitter. CQI exchanges between transmitter and receiver can be done through classical physical layer feedback and signalling channels. This can be either estimated or learned at the transmitter side (for the teacher) or it can be received through a semantic plane feedback channel with semantic channel state information.

In another variant, the process allows before the characterizing step 302, a step (not shown) to allow a transmitter to set a suggested settings for semantic communication chain parameters (semantic extraction parameters, number of semantic concepts (features) per messages, number of semantic symbols per message, etc). The transmitter computes a semantic communication operation point which is constituted by: a semantic extraction rule (which in case of using neural network has learnable parameters), a number of semantic symbols to be used to represent the specific message or messages to be sent. The semantic operation point can be computed by applying a reinforcement learning mechanisms end-to-end (E2E). Alternatively, if a semantic communication operation point has been already computed previously or if it is known by the teacher at the moment of semantic transmission and it is considered still valid at the moment of scheduled semantic transmission, this step may be avoided.

The skilled person would adapt step 302 of characterizing a semantic link quality to the metric used for such characterization. Some possible metrics may be an Instantaneous SNIR (Instantaneous Signal to Noise Ratio), a Capacity, a Channel Gain PER-Indicator (Packet Error Rate), an exp-ESM (Exponential Effective SNR Mapping).

Going back to figure 3, after characterizing a semantic link quality for a semantic channel, the process allows at step 304 characterizing a virtual joint semantic-wireless channel link quality.

In an embodiment, the virtual joint semantic-wireless channel link quality is characterized by at least one semantic-wireless metric computed from at least one metric characterizing the wireless link quality and from at least one metric 306 characterizing the semantic link quality 302.

In an embodiment, the process allows translating a current measured or estimated RF (or wireless) channel quality (for instance mapped through a LUT as stated before) into an equivalent semantic-RF (or semantic-wireless) channel quality.

The process next continues with a step 308 for determining physical and semantic constraints parameters for RF (wireless) waveform shaping.

In an embodiment, step 308 is performed using the at least one semantic-wireless metric computed on previous step 304 and semantic mapping rules 310 generated by the semantic mapping module 206.

In an embodiment, the process comprises a further step for evaluating an adaptive mechanism, i.e. for evaluating whether an adaptation is to be done before transmitting a semantic message, either at the semantic level only or at the physical level only or at the wireless level only or at both the wireless waveform and the semantic channel.

Such adaptation evaluation step may be performed either before step 308 or after step 308.

In an embodiment of the adaptation evaluation step, an evaluation module of a teacher entity assigns a "quantize quality" to possible wireless channels (and then to the related adaptive mechanism that can be put in place) to be used. This step is based on parameters previously defined, for instance, based on a LQI, a wireless communication mode ($WC^{mode_i}$) (for example the modulation and coding scheme, the number of antennas at the transmitter and receiver, etc.), and/or on the semantic communication mode ($SC^{mode_i}$) (for example the number of concepts per messages to be extracted, the number of semantic symbols per messages to be transmitted, etc.). L-levels of semantic wireless-semantic channel values may be attributed for the evaluation. For instance:

- a L-0 level when a joint semantic and physical radio channel is labelled as 'good'. In that case, no semantic and wireless channel adaptation is needed. Semantic communication parameters are not changed; semantic extraction/mapping and inverse function at the receiver are unchanged from previous(s) communication attempts. Adaptive modulation and coding (AMC) techniques at wireless channel level is operated following rules from previous(s) communication attempts. As an example, this means that wireless channel is good for semantic communications. This means that the SNR exceeds a threshold ($W_{th}$) for which the semantic communication is insensitive to encoding/decoding wireless errors (due to noise and interference).

- a L-1 level when a joint semantic and physical radio channel is labelled as not 'good enough': This is the case when the actual wireless channel and the adaptive mechanism configuration have to be improved and/or the semantic strategy is not robust enough given the actual semantic channel and wireless channel. Compared to the L-0 level, the SNR here is below the threshold $W_{th}$, and for the actual $SC^{mode_i}$. a semantic and wireless channel adaptation is triggered.

In a first embodiment, L-1-a, an *adaptation is done at the semantic level* only. The process allows re-computing an operational point/region for the semantic trade-off (for instance robustness versus compression or energy efficiency versus robustness), thus re-parametrizing the semantic communication chain.

In a second embodiment, L-1-b, an *adaptation is done at the physical (wireless) channel level* only. The process allows re-computing an operational point/region for the wireless trade-off (for instance robustness versus compression or energy efficiency versus robustness), thus re-parametrizing the semantic communication chain.

In a third embodiment, L-1-c, an *adaptation is done at the wireless level* only. The process allows shaping the physical radio signal to control the wireless propagation channel robustness and costs. Thus, an operational point/region is re-computed for the wireless trade-offs which rule the adopted Adaptive Modulation and coding (AMC) strategies, thus re-parametrizing the wireless communication chain. Note that on top of this, alternative AMC strategies can be adopted, for instance including safety margins in the selection of AMC mode $WC^{mode_i}$ given $LQM_w$.

In a fourth embodiment, L-1-d, an adaptation is done for the joint semantic and wireless channel. Both the wireless signal waveform and the semantic channel are adapted. This embodiment may be implemented as an iterative process with the following steps:

- Step 1: Start with embodiment L-1-b.
- Step 2: Re-compute $LQM_w^{'}$ with the new waveform shape reconfiguration.
- Step 3: Check if $LQM_w^{'} <$ threshold $W_{th}$ (meaning the wireless channel is still "not good enough"), then operate embodiment L-1-c, otherwise stop the process and go to step 304.
- Step 4: Re-compute $LQM_w^{''}$ with the new waveform reconfiguration which has modified the sensitiveness of the signal to physical channel noise, interference etc..
- Step 5: Check if $LQM_w^{''} <$ threshold $W_{th}$ (meaning the semantic channel is still "not good enough"), then operate embodiment L-1-a.
- Step 6: Change $SC^{mode_i'}$, check if with the new $SC^{mode_i'}$, $LQM_w^{''} <$ threshold $W_{th}$. If $LQM_w^{''} <$ threshold $W_{th}$ for the new $SC^{mode_i'}$, stop the process and go to step 304, otherwise go back to step 1 with $SC^{mode_i'}$.

The iterative process can either stop after a fixed number of iterations, or after full exploration of all possible $SC^{mode}_i$ modes, or given a stopping criteria that can be set. The specific stopping criteria are out of the scope of the present invention. It can for instance be set when the maximum total energy consumption for the communication is reached (since degrading modes we send more semantic symbols and we use more communication resources such as transmission power, etc.

As an alternative, a one shot implementation (i.e. not an iterative process) of embodiment L-1-d can be implemented, stopping indeed at step 6.

- a L-2 level when joint semantic and physical radio channel is labelled as 'too good'. The actual wireless channel and the adaptive mechanism configuration exceed the needs for successful semantic communication. The actual SNR value is higher than $W_{th}$. In this case, the process runs as for embodiments for L-1 level, with strategies of embodiments L-1-a to L-1-d that can be followed, but as an inverse approach. Instead of increasing the quality of the wireless and/or the semantic transmission settings, the process allows reducing it. This means that at the semantic level, for example, more compression is done for instance and or a many-to-one semantic symbol representation is adopted, and/or less robust communication configuration is used at the wireless channel and/or the support of the physical channel waveform is reduced for that specific couple of sender and receiver (i.e. teacher and learner).

- a L-3 level when unreliable estimate or prediction of physical channel and semantic channel adaptation related metrics. This include for instance that there is unreliable availability of $LQM_w$ and/or of best $SC^{mode}_i$ for semantic transmission. Classical safety margin techniques can be adopted, thus pushing adaptation strategies for a more robust selection of the set of adapted parameters.

Going back to figure 3, the process continues after step 308 (with or without optional adaptation evaluation step) with a next step 312 for computing at least one wireless waveform shape for the semantic message. This step is performed using the previously determined shaping constraints parameters.

According to various embodiments, the waveform shaping computation is based on a choice of an orthogonal basis that could decompose a waveform under temporal or sequential or frequential forms, using coefficients such as:

- for temporal forms: piecewise linear approximation and any associated techniques;

- for sequential forms: Walsh Transform and any associated techniques (Orthogonal Walsh-division Multiplexing (OWDM) for example);

- for frequential forms: Fourier Transform and any associated techniques (OFDM for example).

In an embodiment, the step of computing at least one wireless waveform shape for the semantic message comprises the steps of: - extracting syllables from the semantic message; - associating syllables to form groups of semantic symbols; - translating each group of semantic symbols into a sequence of coefficients specific to at least one waveform ; and building the at least waveform shape such that for each at least one waveform the amplitude, the number, the placement and the synchronization of the coefficients within a sequence respect a target spectrum mask.

Indeed; at a signal encoder module of the transmitter, each semantic message is translated into a RF signal. The information is extracted in semantic form, for example "you are hired" is broken down into syllables ("you", "a", "re" ...). The association of syllables forms a semantic map where the meaning guides the path from one symbol to another.

Each semantic symbol is then translated into a sequence of coefficients (for example a sequence of Walsh coefficients ($X_i$)). The use of the coefficients is free in amplitude, in number, in placement, in synchronization but responds to constraints to guarantee a respect of spectrum use (context, environment, standard). The signal can be constituted adapting the number of symbols, the amplitude of the coefficients, their placement but the overall signal shape must respect constraints to guarantee the mask on spectrum.

The resulting temporal signal is arbitrary but whose spectrum is shaped. Moreover, the time representation of the signal is arbitrary but its respects the target spectrum.

Advantageously, the RF signal is received at the receiver side with strong noise immunity, because the spectrum is adapted to the context (for instance spread for "fading"). Each coefficient $X_i$ is received and converted into amplitude (quantization), number (defined by the context), placement ("i") and in accordance with the spectral rules. The coefficients are then translated into symbols. Symbols are associated with syllables using the semantic map: "you", "a", "re", "fi", "red" forms "you are fired". The semantic form is understood and corrected in information as "you are hired" is the meaning that should be understood.

This explains how thanks to the semantic communication layer the classical physical layer communication operates as if there was a better wireless channel (for instance a larger equivalent signal to noise ration - SNR). Thus to support the correct interpretation at the semantic layer the physical channel communication should be "good enough" to allow correct semantic interpretation. Thus, a too robust waveform is not required and results in a waste of resources (time, frequency, energy, computation due to complexity, etc.).

At the same time, if the wireless propagation channel has low quality - for instance low SNR - it causes more errors in the reception of the wireless transmitted bits representing the semantic symbols) with the reconfiguration of RF waveforms that alter the sensitivity to errors due to the wireless propagation channel. If there are too much errors at the physical wireless level, the semantic level is not able to correct such errors; leading to an erroneous interpretation of the received semantic message.

The more the errors at the wireless level, the higher is the probability of miss interpretation of semantic symbols and thus semantic concept interpretation. One can note that semantic communication effectiveness can be measured by several metrics indicating for instance semantic compression gain, semantic robustness. Then advantageously, the present invention offers a generic solution in the sense that it applies to any semantic communication trade-offs for which the optimal or selected operation point depends also on the quality of the wireless communication channel.

If a semantic channel has a low quality (for instance if a teacher and a learner critically speaks different languages), the same messages are associated to different meanings.

When the semantic channel is of low quality, the overall semantic communication cannot be performed correctly since even if bits are conveyed correctly from the teacher to the learner, the intended message from the teacher is misinterpreted by the learner.

Going back to step 312, in an embodiment, the step of translating each group of semantic symbols into a sequence of coefficients specific to at least one waveform consists in translating the semantic symbols into a sequence of coefficients. The coefficients may be chosen from the group of Walsh, FBMC, GFDM, OFDM-like or UFMC coefficients, or any other coefficients relative to a waveform shape.

In case Walsh coefficients are selected, the waveform design is computed taking into account:

- the Walsh coefficients order (thus a number of sequences);

- a quantization of the coefficients (for example 8 bits, meaning $2^8$ quanta for amplitude quantification);

- a combination and placement of coefficients over N coefficients;

- Timing of coefficients refreshment.

Going back to figure 3, in a next step 314, the process allows building a RF (wireless) signal representing the semantic message, based on the at least one RF (wireless) waveform shape previously computed.

In an embodiment, the process allows an optional step, for using the computed waveform design to control semantic communication settings. Each RF waveform design identified implies:

- RF symbol costs (energy costs for transmission, latency, frequency occupation, HW complexity, etc);

- Receiver (learner) decoder robustness to wireless communication errors;

- Spectral occupation;

- Etc.

Each group of semantic symbols to represent a message imply a trade-off between:

- Robustness to wireless channel impairments (more symbols larger robustness) versus Cost/complexity of transmission (more symbols larger costs: energy, spectrum occupation, radio resources, latency, ...);

- Robustness to semantic channel impairments.

This step allows computing adaptively the number of required semantic symbols to represent a (or a set of) message(s) given an adapted waveform signal while attaining a target sufficient robust end-to-end (E2E) communication, such that messages are interpretable at the receiver side in presence of wireless channel communication errors which depends on the actual physical channel quality and the selected RF (wireless) signal design(s). To do so, the method computes and associates a score (for instance normalized to range between 0 and 1) to the end-to-end (E2E) semantic message transmission effectiveness (i.e. the semantic + RF waveform).

In an embodiment, the computation of the score is done 'one-shot' or in another embodiment, the computation is done iteratively so that, the process allows exploring other RF signal shapes and exploring other scores.

The score computation is performed with the following sub-steps:
For all 'i' RF waveform possible settings that respect the physical and semantic constraints parameters, the process allows a sub-step of computing a value 'A' representing a minimal number of semantic symbol representations that optimize the semantic robustness versus complexity trade-off.

In an embodiment, the process allows applying reinforcement learning to compute the optimal number of semantic symbols. Different loss functions can be adopted. For instance, one can minimize the following loss function in a reinforcement learning process:

$$\mathcal{L}_{\theta,\vartheta}^{\alpha,\beta} = I_\theta(X;M) - (1+\alpha)I_\theta(X;Y) + \beta\, E_y\{\mathrm{KL}(p_\theta(m|y)\|q_\vartheta(m|y))\}$$

where:

- $I_\theta(X;M)$ : represents the average number of bits needed to represent message m (encoder complexity);
- $I_\theta(X;M)I_\theta(X;Y)$ : represents the mutual information of the physical communication channel between the transmitter and the receiver;
- $E_y\{\mathrm{KL}(p_\theta(m|y)\|q_\vartheta(m|y))\}$: represents the expected Kullback Leibler divergence (semantic distortion measure). Note that other divergence measures can be used.
- $\alpha$, $\beta$, $\theta$, $\vartheta$ are learnable parameters.

The process further allows a sub step of computing a value 'B' for the associated RF symbols costs. This depends on the specific type of waveform adopted and the cost of interest (spectrum occupancy, energy, latency, etc.). Different embodiments are possible, for example with a Walsh-Fourier Transformation:

$$\tilde{x}(t) = c_0 Wal(0,t) + \sum_{n=1}^{M}(c_n Wal(n,t))$$

with x(t) the RF signal, Wal(i,t) the Walsh sequences and $c_i$ the Walsh coefficients Ci which are combined together and defined to be associated to semantic symbols. The spectral compliance is provided by the Walsh-Fourier transform that carries out rules on coefficients use.

The process further allows a sub-step of computing a value 'C' for the number of RF symbols per semantic symbols. This depends on the equivalent LQI metric (for example the SNReq) of the joint semantic and RF channel.

Then, the process further allows a sub-step of computing a minimal E2E cost over all admissible 'i' RF waveform settings. This value is proportional to A*B*C.

Going back to figure 3, once the RF (wireless) signal is built, the process on a next step 316 allows transmitting the RF (wireless) signal over the wireless channel to thereby operate the semantic message transmission.

Advantageously, the present invention offers a time dimension of waveform adaptation. The adaptation of the waveform can be at different time scales. It can be fixed over the whole duration of a block of semantic messages. It can be adapted in case of detected transmission errors, or it can be adapted during the transmission of different semantic messages in a set of semantic messages. The method then allows also that when receiving a first semantic transmission in accordance with a first waveform type via a combined semantic and wireless channel, a second semantic transmission in accordance with a second waveform type via the channel may also be received. The second waveform type can be either the same or different than the first waveform type. It is also possible that different semantic message transmissions are operated over different time-frequency resources of the RF (wireless) channel than the first semantic transmission. The present invention further considers that by changing semantic communication settings (semantic extraction and interpretation policies, number of semantic symbols per semantic messages, etc) during the transmission of semantic messages belonging to the same block of semantic messages, RF waveform signal can be adapted to the changing semantic channel variations.

Classically, with adaptive RF design, the (wireless) channel state information is acquired to the transmitter and the transmit signal is dynamically adapted so as to maximize the DC power at the output of the rectifier, accounting for the wireless channel and potentially also the rectifier nonlinearity.

With semantic communications, impairments and dynamic are not only due to the wireless channel characteristics such as multipath, noise, interference, blocking. Impairments and dynamic are also due to effects at the semantic plane, thus due to the semantic channel. Semantic communications introduce a two-side communication channel: semantic and wireless. These are entangled.

The present invention addresses the challenge of jointly adapting the semantic chain (semantic extraction from data - selecting semantic concepts given a semantic extraction rule/function, mapping of semantic concepts into semantic symbols (that also includes the number of semantic symbols adopted to represent concepts), with the adaptation of the radio waveform signal design.

For instance adaptation rules impact on optimal functional point/region selection for the trade-off between semantic compression (reduction of bits being sent through the wireless channel and elaborated at the receiver) versus semantic robustness (ability at the receiver/semantic-interpreter to understand correctly the intended meaning stimulated by the sender). Several works in the literature address such trade-off assuming either the wireless channel error free, or assuming that adaptive mechanisms (including adaptive RF waveform design) is not adapted to better support the semantic communication and/or to best profit of semantic communication robustness properties (better error correction thanks to the additional layer of semantic interpretation).

To summarize, the essential points of the present invention, lie to an adaptation based on a pre-computed set of candidate waveforms, and to selecting one of the candidate waveforms for data transmission that can minimize the associated cost of communication and optimize its performance (energy costs for transmission, latency, frequency occupation, HW complexity, etc). The candidate waveforms may be identified in accordance with one or more criteria, taking into account the semantic component of the communication in addition to classical physical channel RF waveform design criteria, such as transmission capability of the transmitting device, reception capability of the receiving device, desired Peak-to-Average-Power-Ratio (PAPR) characteristic, adjacent channel interference (ACI) rejection requirements, or spectrum localization requirements.

The present invention may be a method and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

**Claims**

1. A computer implemented method for communicating semantic messages over a radio frequency RF channel, the RF channel being **characterized by** a RF link quality, the method comprising:

   - characterizing a semantic link quality for a semantic channel, for the transmission of a semantic message between a transmitter and a receiver;
   - determining, from at least one metric characterizing the RF link quality and at least one metric characterizing the semantic link quality, at least one semantic-RF metric characterizing a link quality of a virtual joint semantic-RF channel;
   - determining, from the at least one semantic-RF metric and semantic mapping rules, physical and semantic constraints parameters for RF waveform shaping;
   - computing at least one RF waveform shape for the semantic message, using the shaping constraints parameters;
   - building a RF signal representing the semantic message, based on the at least one RF waveform shape; and
   - transmitting the RF signal over the RF channel.

2. The method of claim 1 wherein the step of characterizing a semantic link quality, comprises the step of classifying the semantic link quality as binary quality or as multi-levels quality.

3. The method of claim 1 or 2 wherein the step of determining at least one semantic-RF metric, comprises the step of translating the at least one RF metric into at least one semantic-RF metric using precomputed look-up tables (LUT) obtained either by statistical measurements of both semantic channels performances and physical channels performances, or by instantaneous measurements or by statistical measurements refined with instantaneous measurements.

4. The method of anyone of claims 1 to 3 wherein the semantic mapping rules define at least how semantic information is extracted from a semantic message and how semantic concepts are mapped into semantic symbols.

5. The method of anyone of claims 1 to 4 wherein the step of characterizing a semantic link quality comprises a step of computing an operation point for semantic communication with communication parameters comprising at least extraction rules and a number of semantic symbols for representing a semantic message to transmit.

6. The method of claim 5 further comprising before the step of computing at least one RF waveform shape for the semantic message, a step of determining if an adaptation is to be done to communication parameters of the semantic channel or to communication parameters of the wireless channel, or to both.

7. The method of anyone of claims 1 to 6 wherein the step of computing at least one RF waveform shape for the semantic message comprises the steps of: - extracting syllables from the semantic message; - associating syllables to form groups of semantic symbols; - translating each group of semantic symbols into a sequence of coefficients specific to at least one waveform ; and building the at least one waveform shape such that, for each at least one waveform, the amplitude, the number, the placement and the synchronization of the coefficients within a sequence respect a target spectrum mask.

8. The method of claim 7 wherein the step of translating each group of semantic symbols into a sequence of coefficients specific to at least one waveform consists in translating into a sequence of coefficients chosen from the group of Walsh, FBMC, GFDM, OFDM-like or UFMC coefficients.

9. The method of anyone of claims 1 to 8 wherein the step of building a RF signal, comprises a step of computing parameters characterizing the RF waveform signal.

10. The method of anyone of claims 7 to 9 further comprising computing the number of required semantic symbols to represent the semantic message with an adapted waveform signal.

11. The method of anyone of claims 1 to 10 comprising a preliminary step of collecting or estimating information on the RF link quality.

12. The method of anyone of claims 1 to 11 wherein the RF channel is a wireless channel for communicating semantic messages over a wireless, the wireless channel being **characterized by** a wireless link quality.

13. A non-transitory computer-readable storage medium coupled to one or more computers and configured with instructions executable by the one or more computers to perform the method of any one of claims 1 to 12.

14. A system comprising :

one or more computers; and
one or more computer-readable memories coupled to the one or more computers and configured with instructions executable by the one or more computers to perform the method of any one of claims 1 to 12.

<u>100</u>

**FIG.1**

FIG.2

300

```
                          ┌─────────┐
                          │  Start  │
                          └────┬────┘
                               │
                               ▼
                   ┌───────────────────────┐
                   │ Characterization of    │        302
                   │ semantic               │
                   │ channel link quality   │
                   └───────────┬───────────┘
```

302

Characterization of semantic channel link quality

306

Wireless link Quality

304

Characterization of virtual joint semantic-wireless channel link quality

310

Semantic Map

308

Determination of physical and semantic constraints parameters for wireless waveform shaping

312

Compute wireless waveform shapes

314

Build wireless signal with selected waveform shape(s)

316

Transmit wireless signal

End

**FIG.3**

Europäisches Patentamt
European Patent Office
Office européen des brevets

# EUROPEAN SEARCH REPORT

Application Number

EP 23 30 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO SHUAISHUAI ET AL: "Signal Shaping for Semantic Communication Systems with A Few Message Candidates", 2022 IEEE 96TH VEHICULAR TECHNOLOGY CONFERENCE (VTC2022-FALL), IEEE, 26 September 2022 (2022-09-26), pages 1-5, XP034277142, DOI: 10.1109/VTC2022-FALL57202.2022.10012981 [retrieved on 2023-01-18] * Sections I and II * | 1-14 | INV. H04L1/00 G06V20/00 |
| A | US 2023/094234 A1 (ROESSEL SABINE [DE] ET AL) 30 March 2023 (2023-03-30) * paragraphs [0029] – [0049], [0058] – [0065]; figures 2,3A * * paragraph [0067]; figure 4 * | 1-14 | |
| A | ZHENMING YU ET AL: "Semantic optical fiber communication system", ARXIV.ORG, CORNELL UNIVERSITY LIBRARY, 201 OLIN LIBRARY CORNELL UNIVERSITY ITHACA, NY 14853, 27 December 2022 (2022-12-27), XP091405128, * pages 1-9 * | 1-14 | TECHNICAL FIELDS SEARCHED (IPC) H04L G06V |
| A | ZHILIN LU ET AL: "Semantics-Empowered Communication: A Tutorial-cum-Survey", ARXIV.ORG, CORNELL UNIVERSITY LIBRARY, 201 OLIN LIBRARY CORNELL UNIVERSITY ITHACA, NY 14853, 16 December 2022 (2022-12-16), XP091395983, * Section II, IV, VI * | 1-14 | |

The present search report has been drawn up for all claims

| Place of search | Date of completion of the search | Examiner |
|---|---|---|
| Munich | 19 September 2023 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 5542**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-09-2023**

| Patent document cited in search report | | Publication date | Patent family member(s) | Publication date |
|---|---|---|---|---|
| US 2023094234 A1 | | 30-03-2023 | CN 116319700 A | 23-06-2023 |
| | | | DE 102022210084 A1 | 30-03-2023 |
| | | | US 2023094234 A1 | 30-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. GUO ; Y. WANG ; P. ZHANG.** Signal Shaping for Semantic Communication Systems with A Few Message Candidates. *arxiv arXiv:2202.02072,* February 2022